# DEMANDE DE BREVET EUROPEEN

(11) **EP 1 217 706 A1**
(43) Date de publication de la demande: **26.06.2002**
(21) Numéro de dépôt: 01402981.3
(22) Date de dépôt: 21.11.2001
(51) Int. Cl.: H02H 1/00

(54) **Protection pour réseau électrique ayant une liaison radio de transmission de données dite "Bluetooth"**

(30) Priorité: 19.12.2000 FR 0016598
(71) Demandeur: Alstom, 75116 Paris (FR)
(72) Inventeur: Montjean, Dominique, 78000 Versailles (FR)
(74) Mandataire: Gosse, Michel

(57) **Abrégé**

La protection numérique pour réseau électrique haute tension, destinée à commander l'ouverture de disjoncteurs (13,14,15) en cas de défauts relevés par des capteurs de courant et/ou de tension sur des lignes (10,11,12) du réseau reliées aux disjoncteurs, comprend une liaison radio de transmission de données avec un téléphone portable du type « Bluetooth ».

## Description

L'invention porte sur une protection numérique pour réseau électrique, destinée à commander l'ouverture de disjoncteurs en cas de défauts relevés par des capteurs de courant et/ou de tension sur des lignes du réseau reliées aux disjoncteurs, et comprenant une liaison de transmission de données avec un appareil distant.

Une telle protection est plus particulièrement utilisée dans les postes électriques haute tension. Elle comprend généralement un processeur qui reçoit des valeurs de courant et/ou de tension mesurées par les capteurs montés sur les lignes à surveiller du réseau, compare ces valeurs de courant et/ou de tension mesurées à des valeurs de consigne correspondantes et dans le cas où les valeurs de courant et/ou de tension mesurées franchissent les valeurs de consigne correspondantes, le processeur commande l'ouverture d'un ou des disjoncteurs pour couper la ou les lignes en défaut du réseau électrique.

Jusqu'à présent, pour charger ces valeurs de consignes dans la protection, on utilise un ordinateur portable qui est raccordé à la protection par une liaison de transmission de données du type filaire. L'ordinateur portable permet non seulement de saisir facilement ces valeurs de consigne au clavier, mais également d'étendre les possibilités pour un opérateur de les modifier et de les éditer à l'écran. Toutefois, du fait que l'ordinateur portable est relié par une liaison de transmission de données de type filaire au système de protection, il peut être sujet à des perturbations et à des dysfonctionnements dues à l'environnement électromagnétique sévère régnant dans le poste électrique autour de la protection. En plus, un ordinateur portable est un appareil relativement fragile, encombrant et qui ne convient pas bien aux conditions d'utilisation dans un poste électrique haute tension.

Le but de l'invention est de remédier à ces inconvénients.

A cet effet, l'invention a pour objet une protection numérique pour réseau électrique, destinée à commander l'ouverture de disjoncteurs en cas de défauts relevés par des capteurs de courant et/ou de tension sur des lignes du réseau reliées aux disjoncteurs, et comprenant une liaison de transmission de données avec un appareil distant, caractérisée en ce que ladite liaison est une liaison radio courte distance utilisant le protocole de transmission dit «Bluetooth ».

La technologie dite « Bluetooth » est une nouvelle technologie de transmission de données (bande ISM à 2,4GHz), de sons et d'images qui s'appuie sur une liaison radio courte distance (de 0 à 100 mètres et de préférence de 0 à 10 mètres). Cette liaison non directionnelle est destinée à se substituer à un câblage entre équipements électroniques, informatiques et téléphoniques.

Selon un mode de réalisation particulier de la protection selon l'invention, l'appareil distant est un téléphone portable et en particulier un téléphone portable qui est équipé d'un module de transmission de données dit « Bluetooth ». Ce type de téléphone, actuellement disponible sur le marché, dispose d'un écran de bonne dimensions avec des touches et un logiciel de navigation Internet. On conçoit donc qu'une protection dans laquelle est chargé un programme de saisie/modification/édition compatible avec un logiciel de navigation Internet, peut être paramétrée très facilement et à moindre coût à l'aide d'un téléphone mobile de petite dimensions et peu coûteux. De plus, la liaison radio de transmission de données permet d'obtenir une isolation galvanique très sure entre la protection et le téléphone portable.

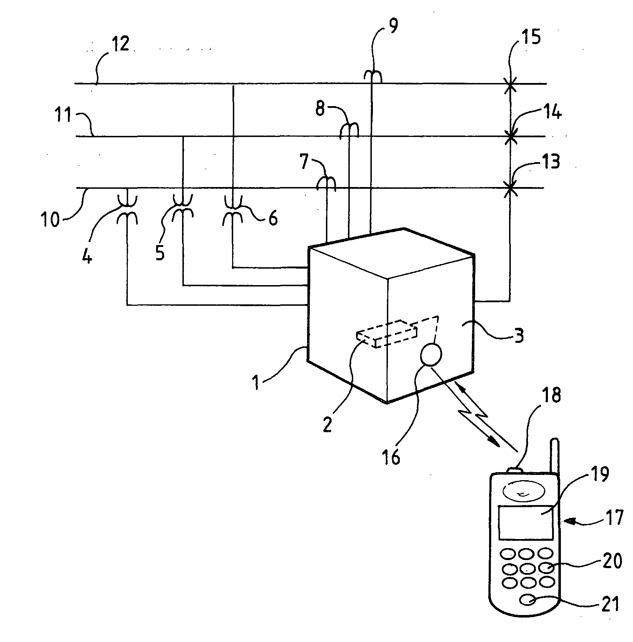

Un exemple de réalisation de la protection numérique pour réseau électrique selon l'invention est décrit ci-après et illustré sur la figure unique.

La protection numérique pour réseau électrique haute tension montrée sur la figure comprend un coffret 1 dans lequel est logé de l'électronique et en particulier un processeur 2. Ce processeur est relié de façon connue à une interface homme/machine (non représentée) du type écran/clavier montée sur la face avant 3 du coffret.

La protection comprend encore des capteurs de courant 4,5,6 et/ou des capteurs de tension 7,8,9 montés sur les lignes à surveiller du réseau, ici les trois lignes 10,11,12, et des disjoncteurs 13,14,15 qui servent à couper les lignes quand elles sont en défaut. Les capteurs de courant et/ou les capteurs de tension sont reliés au coffret 1 pour fournir des valeurs mesurées de courant et/ou de tension au processeur 2 et les disjoncteurs sont reliés au coffret 1 pour recevoir du processeur 2 des signaux de commande d'ouverture. Le processeur 2 est programmé pour comparer les valeurs mesurées à des valeurs de consigne enregistrées en mémoire dans le coffret 1 et pour fournir les signaux de commande d'ouverture aux disjoncteurs quand il détecte que les valeurs mesurées franchissent les valeurs de consigne.

Comme visible sur la figure, une antenne radio 16 (avec un pilote d'antenne) est prévu dans la face avant du coffret 1 et est reliée au processeur 2. Le processeur 1 est programmé pour exécuter un programme interactif de saisie/modification/édition des valeurs de consigne dans le boîtier 1 en communiquant à travers l'antenne radio 16 selon le protocole « Bluetooth ». Le programme interactif de saisie/modification/édition est donc conçu comme un serveur Internet compatible pour une navigation Internet. La communication avec le programme de saisie/modification/édition se fait à distance et sans fil par l'intermédiaire d'un téléphone cellulaire portable 17 qui est muni également d'un module « Bluetooth » avec une antenne radio 18. Ce téléphone 17 est plus particulièrement un téléphone cellulaire portable dit de seconde génération disponible sur le marché et muni d'un écran 19, d'un clavier alphanumérique 20 et d'une ou plusieurs touches de navigation Internet 21. Un tel téléphone présente des fonctionnalités équivalentes à un ordinateur portatif pour la saisie/modification/édition des valeurs de consigne ou d'autres données de la protection.

## Revendications

1. Une protection numérique pour réseau électrique, destinée à commander l'ouverture de disjoncteurs (13,14,15) en cas de défauts relevés par des capteurs de courant et/ou de tension sur des lignes (10,11,12) du réseau reliées aux disjoncteurs, et comprenant une liaison de transmission de données avec un appareil distant, **caractérisée en ce que** ladite liaison de transmission est une liaison radio courte distance (16,18) utilisant le protocole de transmission dit «Bluetooth ».

2. La protection numérique selon la revendication 1, dans laquelle l'appareil distant est un téléphone portable (17).

3. La protection numérique selon la revendication 2, comprenant un processeur (2) programmé pour recevoir des valeurs de mesure de courant et/ou de tension, comparer ces valeurs de mesure à des valeurs de consigne correspondantes maintenues en mémoire dans la protection et en réponse à ladite comparaison, fournir des signaux de commande d'ouverture aux disjoncteurs (13,14,15), et dans laquelle ledit processeur est en outre programmé pour exécuter un programme interactif de saisie/modification/édition desdites valeurs de consigne en communiquant à travers la liaison radio courte distance avec le téléphone portable selon le protocole de transmission dit « Bluetooth ».
